Europäisches Patentamt

European Patent Office

Office européen des brevets

(11) Publication number: **0 435 243 A2**

# EUROPEAN PATENT APPLICATION

(21) Application number: 90125460.7

(22) Date of filing: 24.12.90

(51) Int. Cl.⁵: **C08J 5/04, C08L 81/02**

(30) Priority: 28.12.89 US 458338

(43) Date of publication of application:
03.07.91 Bulletin 91/27

(84) Designated Contracting States:
AT BE CH DE ES FR GB IT LI NL

(71) Applicant: PHILLIPS PETROLEUM COMPANY
5th and Keeler
Bartlesville Oklahoma 74004(US)

(72) Inventor: Beever, William Herbert
RR No. 2, Box 2670
Bartlesville, OK 74006(US)
Inventor: O'Connor, James Edward
5908 Martin Place
Bartlesville, OK 74006(US)

(74) Representative: Geissler, Bernhard, Dr. jur.,
Dipl.-Phys. Patent- und Rechtsanwälte et al
Bardehle-Pagenberg-Dost-
Altenburg-Frohwitter-Geissler & Partner
Postfach 86 06 20
W-8000 München 86(DE)

(54) Thermoplastic composite with improved properties, and method of making the same.

(57) An article of manufacture comprises a thermoplastic composite including a reinforcing fiber in a poly(arylene sulfide) matrix comprising an uncured, high molecular weight poly(arylene sulfide) resin and a cured poly(arylene sulfide) resin. This produces a composite having an improved combination of toughness and resin/fiber adhesion.

EP 0 435 243 A2

## THERMOPLASTIC COMPOSITE WITH IMPROVED PROPERTIES, AND METHOD OF MAKING THE SAME

Background of the Invention

This invention relates generally to poly(arylene sulfide) composites and methods of making them. The invention relates more particularly to an article of manufacture comprising, and a method of making, a thermoplastic composite including a reinforcing fiber in a poly(arylene sulfide) matrix comprising an uncured, high molecular weight poly(arylene sulfide) resin and a cured poly(arylene sulfide) resin.

A poly(arylene sulfide) composite includes one or more reinforcing fibers embedded within a matrix made of one or more poly(arylene sulfide) resins. To have utility for a particular purpose, such a composite needs to have suitable adhesion between the reinforcing fiber or fibers and the resin of which the matrix is made. Such a composite also needs to have an adequate toughness for the desired use.

Using a single type of poly(arylene sulfide) resin typically allows one to obtain either a desired adhesion or a desired toughness, but not both when relatively high degrees of both are needed. Thus, there is the need for a thermoplastic composite and method of making the same which provides both a desired resin/fiber adhesion and a desired toughness.

Summary of the Invention

The present invention overcomes the above-noted and other shortcomings of the prior art by providing a novel and improved thermoplastic composite with improved properties and method of making the same. The composite of the present invention has an improved combination of both toughness and resin/fiber adhesion.

The present invention provides an article of manufacture comprising a thermoplastic composite including a reinforcing fiber in a poly(arylene sulfide) matrix comprising an uncured, high molecular weight poly(arylene sulfide) resin and a cured poly(arylene sulfide) resin.

More particularly, the present invention provides an article of manufacture comprising a thermoplastic composite including a continuous reinforcing fiber embedded in a poly(arylene sulfide) matrix comprising an uncured, high molecular weight poly(arylene sulfide) resin and a cured poly(arylene sulfide) resin wherein the uncured, high molecular weight poly(arylene sulfide) resin gives more toughness to the matrix than with the cured poly(arylene sulfide) resin alone and further wherein the cured poly(arylene sulfide) resin gives better adhesion between the matrix and the fiber than with the uncured, high molecular weight poly(arylene sulfide) resin alone.

The present invention also provides a method of making a thermoplastic composite having improved toughness and resin/fiber adhesion. The method comprises combining uncured, high molecular weight poly-(arylene sulfide) resin and cured poly(arylene sulfide) resin with a continuous reinforcing fiber so that a thermoplastic composite having improved toughness due to the uncured, high molecular weight poly-(arylene sulfide) resin and further having improved resin/fiber adhesion due to the cured poly(arylene sulfide) resin is thereby formed.

From the foregoing, it is a general object of the present invention to provide a novel and improved thermoplastic composite with improved properties, and a method of making the same. Other and further objects, features and advantages of the present invention will be readily apparent to those skilled in the art when the following description of preferred embodiments is read.

Detailed Description of the Preferred Embodiments

The present invention provides an article of manufacture comprising a thermoplastic composite which includes one or more reinforcing fibers embedded in a matrix. The matrix is made of two types of poly-(arylene sulfide) resin. A first type of resin gives more toughness to the matrix than with a second type of resin alone. The second type of resin gives better adhesion between the matrix and the one or more fibers than with the first type of resin alone.

The one or more reinforcing fibers of the present invention are of any suitable types known in the art. For example, such a fiber can be a continuous carbon or glass reinforcing fiber.

The poly(arylene sulfide) matrix is a blend of poly(arylene sulfide) resins as mentioned above. One type of resin is an uncured, high molecular weight poly(arylene sulfide) resin, and the other type is a cured poly-(arylene sulfide) resin. Because of its high molecular weight, the former resin gives toughness to the matrix; and because of its chemistry resulting from being cured, the latter resin gives better adhesion. Therefore, the uncured, high molecular weight resin can be either branched or linear; and the cured resin can be either high or low molecular weight. A specific preferred embodiment, however, includes an uncured, branched, high molecular weight poly(arylene sulfide) resin and a cured, branched, high molecular weight poly(arylene sulfide) resin.

The uncured, high molecular weight poly(arylene sulfide) resin can be made in a manner known in the art, such as disclosed in U.S. Patent 3,354,129 to Edmonds, Jr. et al. and U.S. Patent 3,919,177 to Campbell, which are incorporated herein by reference. In a preferred embodiment, this type of resin is made or prepared in a polymerization process utilizing trichlorobenzene. A specific resin made this way is Ryton® PR09 grade poly(phenylene sulfide) resin from Phillips Petroleum Company. This specific resin is an uncured, branched, high molecular weight resin. This type of resin provides a matrix having good toughness, but it has less adhesion to reinforcing fibers than the second type of resin used in the present invention. In one test, using a PR09 type poly(phenylene sulfide) resin having a melt flow rate (ASTM D1238, Procedure B, Condition 315/5.0, modified to use a five-minute preheat time instead of the six-minute minimum of the test method) within the range from about 20 grams per ten minutes to about 65 grams per minute, the short beam shear strength, which is a measure of adhesion between the resin sample and reinforcing carbon fibers, was 9.4 kilopounds per square inch.

Greater adhesion can be obtained using the second type of resin used in the preferred embodiment. The cured poly(arylene sulfide) resin can be made in a manner as known in the art, such as disclosed in the aforementioned patents, or in U.S. Patent 3,524,835 to Edmonds, Jr., et al., incorporated herein by reference. Particularly, this resin is cured by heating in air at a temperature below the melting temperature of the resin. A preferred resin of this type is Ryton® P-4 type poly(phenylene sulfide) resin from Phillips Petroleum Company. This specific resin is a cured, branched, high molecular weight resin. The P-4 type resin has better flow qualities and thus better fiber coating/ impregnating qualities than the PR09 type resin. Curing of the poly(phenylene sulfide) to a P-4 type resin provides more chemical interaction sites which results in better adhesion than can be obtained with the PR09 type poly(phenylene sulfide) resin based upon an examination using a scanning electron microscope. A sample of Ryton® P-4 type poly(phenylene sulfide) resin having a melt flow rate within the range from about 50 grams per ten minutes to about 100 grams per ten minutes and containing lithium carbonate ($Li_2CO_3$) used in a carbon fiber composite had a short beam shear strength of 12.7 kilopounds per square inch.

To make the thermoplastic composite having improved toughness and resin/fiber adhesion, the uncured high molecular weight poly(arylene sulfide) resin and the cured poly(arylene sulfide) resin are combined with the reinforcing fiber so that a thermoplastic composite having improved toughness due to the uncured, high molecular weight poly(arylene sulfide) resin and further having improved resin/fiber adhesion due to the cured poly(arylene sulfide) resin is thereby formed. In the preferred embodiment the uncured, high molecular weight poly(arylene sulfide) resin is preferably prepared using trichlorobenzene, and the cured poly(arylene sulfide) resin is preferably prepared by heating uncured poly(arylene sulfide) resin in air.

The resins and fiber(s) can be combined in various ways. For example, a powder or extruded blend of the uncured and cured resin can be made. Alternatively, the reinforcing fiber(s) can be coated with the cured polymer by melt, solution, etc. impregnation followed by either further curing or no further curing and then combined with uncured, high molecular weight resin. Alternately, the adhesion increasing polymer can be a soluble resin which is put on and either cured or left uncured, prior to addition of the uncured high molecular weight resin.

Whether the resins are first blended or one is first coated on the fiber, a pultrusion impregnation process can be used to form the composite. If the resins are first blended, the reinforcing fiber or fibers are pulled through the blend. If the fiber is first coated, the coated fiber is pulled through the uncured, high molecular weight poly(arylene sulfide) resin. The pultrusion impregnation process can be done in accordance with the disclosure in U.S. Patent 4,680,224 to O'Connor, incorporated herein by reference.

Following is a table comparing properties of different composites including ones made with only one of the two preferred types of resins and three containing different blends of the two preferred resins. From the table, the preferred blend has a matrix comprising about 75 percent by weight of the uncured, branched, high molecular weight poly(phenylene sulfide) resin (PR09) and about 25 percent by weight of the cured, branched, high molecular weight poly(phenylene sulfide) resin (P-4); this is the preferred blend because it has the highest longitudinal Tensile, Flexural and Compressive Properties as shown in the table.

| Example | PR09/P-4 (%/%) | Transverse Tensile[1] Modulus (Msi) | Strength (ksi) | Longitudinal Tensile[1] Modulus (Msi) | Strength (ksi) | Longitudinal Flexural[2] Modulus (Msi) | Strength (ksi) | Longitudinal Modulus (Msi) | Compressive[3] Strength (ksi) |
|---|---|---|---|---|---|---|---|---|---|
| I | 100/0 | 1.24 | 5.1 | 19.2 | 179 | 14.8 | 154 | 17.3 | 82 |
| II | 75/25 | 1.41 | 3.5 | 20.7 | 212 | 17.2 | 172 | 19.2 | 99 |
| III | 50/50 | 1.36 | 4.8 | 17.6 | 144 | 14.4 | 148 | 16.0 | 84 |
| IV | 25/75 | 1.26 | 4.5 | 14.6 | 133 | 12.5 | 143 | 14.7 | 76 |
| V | 0/100 | 1.31 | 3.2 | 16.1 | 142 | 14.7 | 155 | 16.5 | 86 |

[1] ASTM D3039
[2] ASTM D790
[3] ASTM D3410

Example I

Hercules 12K AS4 carbon fibers were impregnated with Ryton® PR09 type poly(phenylene sulfide) resin (PPS) in a pultrusion impregnating process. The fiber reinforced prepreg was then compression

4

molded into a laminate from which the tested specimens of Example I were cut.

Example II

A blend of 75% Ryton® PR09 type PPS and 25% Ryton® P-4 type PPS was made by combining 570 grams of PR09 and 190 grams of P4. Hercules 12K AS4 carbon fibers were impregnated with the blended 75%/25% PR09/P4 resin in a pultrusion impregnating process. The fiber reinforced PPS prepreg was then compression molded into a laminate from which the tested specimens of Example II were cut.

Example III

A blend of 50% Ryton® PR09 type PPS and 50% Ryton® P4 type PPS was made by adding 254 grams of P4 to 508 grams of the 75%/25% blend of PR09/P4 from Example II. Hercules 12K AS4 carbon fiber were impregnated with the 50%/50% PR09/P4 resin in a pultrusion impregnating process. The fiber reinforced PPS prepreg was then compression molded into a laminate from which the tested specimens of Example III were cut.

Example IV

A blend of 25% Ryton® PR09 type PPS and 75% Ryton® P4 type PPS was made by adding 378 grams of P4 to 384 grams of the 50%/50% blend of PR09/P4 from Example III. Hercules 12K AS4 carbon fibers were impregnated with the 25%/25% PR09/P4 resin in a pultrusion impregnating process. The fiber reinforced PPS prepreg was then compression molded into a laminate from which the tested specimens of Example IV were cut.

Example V

Hercules 12K AS4 carbon fibers were impregnated with Ryton® P4 type poly(phenylene sulphide) resin (PPS) in a pultrusion impregnating process. The fiber reinforced PPS prepreg was then compression molded into a laminate from which the tested specimens of Example V were cut.

Thus, the present invention is well adapted to carry out the objects and attain the ends and advantages mentioned above as well as those inherent therein. While preferred embodiments of the invention have been described for the purpose of this disclosure, changes in the construction and arrangement of parts and the performance of steps can be made by those skilled in the art, which changes are encompassed within the spirit of this invention as defined by the appended claims.

## Claims

1. An article of manufacture, comprising a thermoplastic composite including a reinforcing fiber in a poly-(arylene sulfide) matrix comprising an uncured, high molecular weight poly(arylene sulfide) resin and a cured poly(arylene sulfide) resin.

2. An article of manufacture, comprising a thermoplastic composite including a continuous reinforcing fiber embedded in a poly(arylene sulfide) matrix comprising an uncured, high molecular weight poly(arylene sulfide) resin and a cured poly(arylene sulfide) resin wherein said uncured, high molecular weight poly-(arylene sulfide) resin gives more toughness to said matrix than with said cured poly(arylene sulfide) resin alone and further, wherein said cured poly(arylene sulfide) resin gives better adhesion between said matrix and said fiber than with said uncured, high molecular weight poly(arylene sulfide) resin alone.

3. An article as defined in claim 1 or 2, wherein:

said uncured, high molecular weight poly(arylene sulfide) resin is made by a polymerization process utilizing trichlorobenzene; and

said cured poly(arylene sulfide) resin is cured by heating in air at a temperature below the melting temperature of said cured poly(arylene sulfide) resin.

4.  An article as defined in claim 1 or 2, wherein said uncured, high molecular weight poly(arylene sulfide) resin has a melt flow rate within the range from about 20 grams per ten minutes to about 65 grams per ten minutes and wherein said cured poly(arylene sulfide) resin has a melt flow rate within the range from about 50 grams per ten minutes to about 100 grams per ten minutes.

5.  An article as defined in claim 1, wherein both said resins are poly(phenylene sulfide) resins, in particular wherein said cured poly(phenylene sulfide) resin includes lithium carbonate.

6.  An article as defined in claim 2, wherein:

    said uncured, high molecular weight poly(arylene sulfide) resin is an uncured, branched, high molecular weight poly(phenylene sulfide) resin; and

    said cured poly(arylene sulfide) resin is a cured, branched, high molecular weight poly(phenylene sulfide) resin, in particular wherein said cured, branched, high molecular weight poly(phenylene sulfide) resin includes lithium carbonate.

7.  An article as defined in one of the preceding claims, wherein said matrix comprises about 75 percent by weight of said uncured, high molecular weight poly(phenylene sulfide) resin and about 25 percent by weight of said cured poly(phenylene sulfide) resin.

8.  A method of making a thermoplastic composite having improved toughness and resin/fiber adhesion, comprising combining uncured, high molecular weight poly(arylene sulfide) resin and cured poly-(arylene sulfide) resin with a continuous reinforcing fiber so that a thermoplastic composite having improved toughness due to the uncured, high molecular weight poly(arylene sulfide) resin and further having improved resin/fiber adhesion due to the cured poly(arylene sulfide) resin is thereby formed.

9.  A method as defined in claim 8, further comprising preparing the uncured, high molecular weight poly-(arylene sulfide) resin using trichlorobenzene.

10. A method as defined in claim 8 or 9, further comprising preparing the cured poly(arylene sulfide) resin by heating uncured poly(arylene sulfide) resin in air.

11. A method as defined in claims 8 to 10, wherein said step of combining includes:

    blending the uncured, high molecular weight poly(arylene sulfide) resin and the cured poly(arylene sulfide) resin; and

    pulling the fiber through the blend in a pultrusion impregnation process.

12. A method as defined in claims 8 to 10, wherein said step of combining includes:

    coating the fiber with the cured poly(arylene sulfide) resin; and

    pulling the coated fiber through the uncured, high molecular weight poly(arylene sulfide) resin in a pultrusion impregnation process.

13. A method as defined in claims 8 to 12, wherein:

    said uncured, high molecular weight poly(arylene sulfide) resin is uncured, branched, high molecular weight poly(phenylene sulfide) resin; and

    said cured poly(arylene sulfide) resin is cured, branched, high molecular weight poly(phenylene sulfide) resin.